(19) **Europäisches Patentamt / European Patent Office / Office européen des brevets**

(11) **EP 4 755 952 A1**

(12) **EUROPEAN PATENT APPLICATION**
published in accordance with Art. 153(4) EPC

(43) Date of publication:
**10.06.2026 Bulletin 2026/24**

(21) Application number: **24849012.0**

(22) Date of filing: **24.07.2024**

(51) International Patent Classification (IPC):
**C08J 5/18** (2006.01)  **B29C 48/88** (2019.01)
**B29C 48/305** (2019.01)  **B29C 55/12** (2006.01)
**B29C 55/14** (2006.01)  **B32B 27/32** (2006.01)
**B65D 65/40** (2006.01)

(52) Cooperative Patent Classification (CPC):
**B29C 48/305; B29C 48/88; B29C 55/12;
B29C 55/14; B32B 27/32; B65D 65/40; C08J 5/18**

(86) International application number:
**PCT/JP2024/026425**

(87) International publication number:
**WO 2025/028357 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.07.2023 JP 2023123431
04.03.2024 JP 2024032085**

(71) Applicant: **Prime Polymer Co., Ltd.
Tokyo 104-0028 (JP)**

(72) Inventors:
• SEKIYA, Keiko
  Sodegaura-shi, Chiba 299-0265 (JP)
• SAITO, Tetsuya
  Ichihara-shi, Chiba 299-0108 (JP)
• OGUNI, Michihiko
  Ichihara-shi, Chiba 299-0108 (JP)
• TATSUMI, Shuhei
  Sodegaura-shi, Chiba 299-0265 (JP)

(74) Representative: **J A Kemp LLP
80 Turnmill Street
London EC1M 5QU (GB)**

(54) **BIAXIALLY STRETCHED FILM AND METHOD FOR PRODUCING THE SAME**

(57)    A biaxially oriented film including a layer obtained from a material containing an ethylene-based polymer, in which the ethylene-based polymer has a melt flow rate (MFR) of 0.01 g/10 min or higher and 5.0 g/10 min or lower, a density of 941 kg/m$^3$ or higher and lower than 970 kg/m$^3$, and a melt tension of 31 to 250 mN, and Mw/Mn of the ethylene-based polymer is 6.1 or more, the Mw/Mn being a ratio of a weight-average molecular weight (Mw) to a number-average molecular weight (Mn) that are each measured by gel permeation chromatography (GPC).

EP 4 755 952 A1

## Description

Technical Field

The present disclosure relates to a biaxially oriented film and a production method thereof.

Background Art

In recent years, acts concerning disposal of a variety of plastics have been enacted in consideration of environmental issues. For packaging materials as well, there is an increasing need for recycling. Therefore, a variety of studies are underway regarding recyclable packaging materials (for example, refer to Patent Literatures 1 and 2). As recyclable packaging materials, for example, packaging materials made of a single material (mono-material packaging materials) are attracting attention, and specifically, polyethylene-based mono-material packaging materials are being studied.

Citation List

Patent Literature

Patent Literature 1: JP6716764B
Patent Literature 2: JP2020-121455A

Summary of Invention

Technical Problem

Ordinary packaging materials include a film made of a variety of resins as a substrate. Polyethylene-based mono-material packaging materials include a polyethylene-based substrate. Examples of characteristics necessary for the polyethylene-based substrate include stiffness, low shrinkage, and strength. As a method for improving strength, there is a method in which a film is stretched, and for example, a biaxially oriented film tends to be superior in terms of strength to a uniaxially oriented film. In addition, from the viewpoint of stiffness and low shrinkage, high-density polyethylene (HDPE) is suitable as a polymer that constitutes polyethylene-based substrates. However, generally, there is a tendency that it is difficult to biaxially stretch a film made of high-density polyethylene.

An object of the present disclosure is to provide a polyethylene-based biaxially oriented film having an excellent balance among stiffness, low shrinkage, and strength and a production method thereof.

Solution to Problem

An aspect of a biaxially oriented film of the present disclosure is a biaxially oriented film including a layer obtained from a material containing an ethylene-based polymer, in which the ethylene-based polymer has a melt flow rate (MFR) of 0.01 g/10 min or higher and 5.0 g/10 min or lower, a density of 941 kg/$m^3$ or higher and lower than 970 kg/$m^3$, a melt tension of 31 to 250 mN, and Mw/Mn of a value of 6.1 or more, the Mw/Mn being a ratio of a weight-average molecular weight (Mw) to a number-average molecular weight (Mn) that are each measured by gel permeation chromatography (GPC).

Another aspect of the biaxially oriented film of the present disclosure is a biaxially oriented film obtained from a material containing an ethylene-based polymer, in which a tensile modulus in a MD direction is 1,000 MPa or more, a tensile modulus in a TD direction is 1,500 MPa or more, a dart impact is 100 g or more, a heat shrinkage rate in the MD direction is 15% or less, and a heat shrinkage rate in the TD direction is 15% or less.

An aspect of a method for producing a biaxially oriented film of the present disclosure includes a step of providing a material containing an ethylene-based polymer having a melt flow rate (MFR) of 0.01 g/10 min or higher and 5.0 g/10 min or lower, a density of 941 kg/$m^3$ or higher and lower than 970 kg/$m^3$, a melt tension of 31 to 250 mN, and Mw/Mn of 6.1 or more, a step of forming a film using at least the material, and a step of biaxially stretching the film.

Advantageous Effects of Invention

According to the present disclosure, it is possible to provide a polyethylene-based biaxially oriented film having an excellent balance among stiffness, low shrinkage, and strength and a production method thereof.

Description of Embodiments

Hereafter, an embodiment of the present disclosure will be described in detail.

Regarding each component that is described in the present specification, one or more kinds thereof can be used.

In the present specification, a homopolymer and a copolymer are referred to as "polymer" in some cases without being particularly differentiated. That is, the term "polymer" is used to mean that the polymer may be a homopolymer or a copolymer.

Ordinarily, a sheet and a film are differentiated from each other by referring to a film-like body having a large thickness as "sheet" and referring to a film-like body having a small thickness as "film" in some cases; however, in the present specification, a sheet and a film are not particularly differentiated based on the thickness but are referred to as "film."

In the present specification, a numerical range n1 to n2 means n1 or more and n2 or less. Here, n1 and n2 are any numbers satisfying n1 < n2. For example, "1 to 10" means 1 or more and 10 or less. In the present specification, in a case where a plurality of lower limit values and a plurality of upper limit values are given for a certain element, a numerical range composed of a combination of a value arbitrarily selected from the given lower limit values and a value arbitrarily selected from the given upper limit values is also regarded as being given.

In the present specification, an ethylene-based polymer may include a constituent unit derived from a biomass-derived monomer (for example, ethylene or $\alpha$-olefin). In addition, a propylene-based polymer may include a constituent unit derived from a biomass-derived monomer (for example, propylene or $\alpha$-olefin). Monomers constituting the polymer may be only biomass-derived monomers or both a biomass-derived monomer and a fossil fuel-derived monomer may be contained. The same kind of monomers constituting the polymer may be only biomass-derived monomers or may be both a biomass-derived monomer and a fossil fuel-derived monomer. The biomass-derived monomer is a monomer obtained using, for example, a plant-derived, animal-derived, or other reproducible natural raw material including fungi, yeast, algae, and bacteria and residues thereof as a raw material, in which 14C isotopes are contained as carbon in a proportion of about $1 \times 10^{-12}$, and the biomass carbon concentration (pMC) measured in accordance with ASTM D6866 is about 100 (pMC). The biomass-derived monomer can be obtained by, for example, a conventionally known method.

The polymer preferably includes a constituent unit derived from a biomass-derived monomer from the viewpoint of reducing an environmental impact (mainly reducing greenhouse gas emission). As long as the polymer production conditions, such as a polymerization catalyst, a polymerization process, and the polymerization temperature, are the same, the molecular structure of the polymer obtained from a raw material monomer containing a biomass-derived monomer is the same as the molecular structure of the polymer obtained from a raw material monomer containing only a fossil fuel-derived monomer except that 14C isotopes are contained in a proportion of about $1 \times 10^{-14}$ to $1 \times 10^{-12}$. Therefore, the performances thereof are also considered to be the same.

In the present specification, an ethylene-based polymer may include a constituent unit derived from a chemical recycling-derived monomer (for example, ethylene or $\alpha$-olefin). In addition, a propylene-based polymer may include a constituent unit derived from a chemical recycling-derived monomer (for example, propylene or $\alpha$-olefin). The monomers that constitute the polymer may be only chemical recycling-derived monomers or may contain a chemical recycling-derived monomer and a fossil fuel-derived monomer and/or biomass-derived monomer that is not derived from chemical recycling. The same kind of monomers that constitute the polymer may be only chemical recycling-derived monomers or may contain a chemical recycling-derived monomer and a fossil fuel-derived monomer and/or biomass-derived monomer that is not derived from chemical recycling. The chemical recycling-derived monomer can be obtained by, for example, a conventionally known method. The chemical recycling-derived monomer is a monomer obtained by returning a polymer that is contained in, for example, waste plastic to a monomer unit, such as ethylene or propylene, by, for example, depolymerization or pyrolysis or a monomer obtained using the monomer as a raw material.

The polymer preferably includes a constituent unit derived from a chemical recycling-derived monomer from the viewpoint of reducing an environmental impact (mainly reducing waste). As long as the polymer production conditions, such as a polymerization catalyst, a polymerization process, and the polymerization temperature, are the same, the molecular structure of the polymer obtained from a raw material monomer containing a chemical recycling-derived monomer is the same as the molecular structure of the polymer obtained from a raw material monomer containing only a fossil fuel-derived monomer that is not derived from chemical recycling. Therefore, the performances thereof are also considered to be the same.

[Biaxially oriented film]

A biaxially oriented film of a first aspect of the present disclosure is

a biaxially oriented film obtained from a material containing an ethylene-based polymer,
in which a tensile modulus in a MD direction is 1,000 MPa or more,

a tensile modulus in a TD direction is 1,500 MPa or more,
a dart impact is 100 g or more,
a heat shrinkage rate in the MD direction is 15% or less, and
a heat shrinkage rate in the TD direction is 15% or less.

A biaxially oriented film of a second aspect of the present disclosure is

a biaxially oriented film, including a layer obtained from a material containing an ethylene-based polymer,
in which the ethylene-based polymer has

a melt flow rate (MFR) of 0.01 g/10 min or higher and 5.0 g/10 min or lower,
a density of 941 kg/m$^3$ or higher and lower than 970 kg/m$^3$,
a melt tension of 31 to 250 mN, and
a molecular weight distribution (Mw/Mn) of 6.1 or more.

When matters common to the biaxially oriented film of the first aspect and the biaxially oriented film of the second aspect are described or when the biaxially oriented film of the first aspect and the biaxially oriented film of the second aspect are not particularly differentiated from each other, both biaxially oriented films will be referred to as "the biaxially oriented film of the present disclosure."

The biaxially oriented film of the present disclosure has an excellent balance among stiffness, strength, and low shrinkage. Therefore, the biaxially oriented film can be suitably used as a substrate that constitutes recyclable packaging materials. In the present specification, the tensile modulus is one index of the stiffness of the film, and the dart impact is one index of the strength of the film.

In the present specification, the MD direction means the resin flow direction, that is, the film take-up direction or the longitudinal direction, and the TD direction means a direction substantially perpendicular to the MD direction or the transverse direction at the time of forming a film (at the time of forming the film of a resin).

The tensile modulus of the biaxially oriented film of the first aspect in the MD direction is 1,000 MPa or more, preferably 1,250 MPa or more, more preferably 1,500 MPa or more, still more preferably 1,600 MPa or more, far still more preferably 1,700 MPa or more, and particularly preferably 2,000 MPa or more. Such a biaxially oriented film has excellent stiffness. The upper limit value of the tensile modulus in the MD direction is not particularly limited. The tensile modulus in the MD direction may be, for example, 7,000 MPa or less, 6,000 MPa or less, or 5,000 MPa or less. The tensile modulus in the MD direction may be, for example, 1,000 to 7,000 MPa.

The tensile modulus of the biaxially oriented film of the first aspect in the TD direction is 1,500 MPa or more, preferably 1,700 MPa or more, and more preferably 2,000 MPa or more. Such a biaxially oriented film has excellent stiffness. The upper limit value of the tensile modulus in the TD direction is not particularly limited. The tensile modulus in the TD direction may be, for example, 12,000 MPa or less, 10,000 MPa or less, or 9,000 MPa or less. The tensile modulus in the TD direction may be, for example, 1,500 to 12,000 MPa.

The details of the measurement conditions of the tensile modulus will be described in the Examples section.

The tensile modulus of the biaxially oriented film can be adjusted with, for example, the density of the ethylene-based polymer that constitutes the biaxially oriented film. Films formed of a material containing an ethylene-based polymer having a high density, such as an ethylene-based polymer having a density of 941 kg/m$^3$ or higher, tend to be high in tensile modulus. The tensile modulus of the biaxially oriented film can also be adjusted with, for example, the stretch ratio.

The dart impact of the biaxially oriented film of the first aspect is 100 g or more, preferably 130 g or more, more preferably 150 g or more, still more preferably 200 g or more, far still more preferably 240 g or more, especially preferably 280 g or more, and particularly preferably 400 g or more. The dart impact of, for example, 500 g or more or 600 g or more is also one aspect. Such a biaxially oriented film has an excellent strength. The upper limit value of the dart impact is not particularly limited. The dart impact may be, for example, 2,000 g or less, 1,500 g or less, or 1,200 g or less. The dart impact may be, for example, 100 to 2000 g or 200 to 2,000 g. The dart impact is measured in accordance with the A method of ASTM D1709. The details of the measurement conditions will be described in the Examples section.

The dart impact of the film can be improved by, for example, biaxial stretching.

The heat shrinkage rate of the biaxially oriented film of the first aspect in the MD direction is 15% or less, preferably 12% or less, more preferably 10% or less, still more preferably 8% or less, and particularly preferably 6.5% or less. Such a biaxially oriented film has excellent low shrinkage. The heat shrinkage rate in the MD direction is, for example, 0% or more.

The heat shrinkage rate of the biaxially oriented film of the first aspect in the TD direction is 15% or less, preferably 14% or less, more preferably 12% or less, and still more preferably 10% or less. The heat shrinkage rate in the TD direction of, for example, 8% or less or 6.5% or less is also one aspect. Such a biaxially oriented film has excellent low shrinkage. The heat shrinkage rate in the TD direction is, for example, 0% or more.

In the present specification, the heat shrinkage rate of the biaxially oriented film is calculated as described below.

The biaxially oriented film is cut to a strip shape that is 10 mm in width and 100 mm in length to obtain a test piece. A test piece in which the longer direction (the length direction) of the test piece is parallel to the MD direction of the film will be expressed as a MD test piece. A test piece in which the longer direction (the length direction) of the test piece is parallel to the TD direction of the film will be expressed as a TD test piece. Each test piece is put into an air oven at 120°C and heated for 15 minutes to confirm the length of the test piece.

The heat shrinkage rate is calculated as described below.

Heat shrinkage rate (%) of biaxially oriented film in MD direction = {length (100 mm) of MD test piece before heating - length (mm) of MD test piece after heating}/100 mm × 100 Heat shrinkage rate (%) of biaxially oriented film in TD direction = {length (100 mm) of TD test piece before heating - length (mm) of TD test piece after heating}/100 mm × 100

The heat shrinkage rate of the biaxially oriented film can be adjusted with, for example, the density of the ethylene-based polymer that constitutes the biaxially oriented film. Films formed of a material containing an ethylene-based polymer having a high density, such as an ethylene-based polymer having a density of 941 kg/m$^3$ or higher, tend to be small in heat shrinkage rate. The heat shrinkage rate of the biaxially oriented film can be suppressed at a low level by, for example, performing a heat fixation treatment at an appropriate temperature after a stretching treatment of the film.

The tear strength of the biaxially oriented film of the first aspect in the MD direction is preferably 1 N or lower and more preferably 0.5 N or lower. The tear strength of the biaxially oriented film of the first aspect in the TD direction is preferably 1 N or lower and more preferably 0.5 N or lower. Such a biaxially oriented film is excellent in easy cuttability. The tear strengths of the biaxially oriented film of the first aspect in the MD direction and in the TD direction may be, for example, 0.01 N or higher. The tear strength is measured by the Elmendorf tear method in accordance with JIS K 7128-2. The details of the measurement conditions will be described in the Examples section.

The tear strength of the film can be decreased by, for example, biaxial stretching and can be adjusted by the stretch ratios in the MD direction and in the TD direction. There is a tendency that an increase in the stretch ratio and the thinning of the film decrease the tear strength of the biaxially oriented film.

The total haze of the biaxially oriented film of the first aspect is preferably 50% or less, more preferably 40% or less, still more preferably 30% or less, far still more preferably 25% or less, and particularly preferably 20% or less. The lower limit value of the total haze of the biaxially oriented film of the first aspect is not particularly limited. The total haze of the biaxially oriented film of the first aspect may be, for example, 1% or more or 3% or more. The total haze may be, for example, 1% or more and 50% or less. The total haze is measured in accordance with JIS K 7136. The details of the measurement conditions will be described in the Examples section.

The thickness of the biaxially oriented film of the present disclosure is preferably 5 μm or more and more preferably 10 μm or more, and is preferably 150 μm or less, more preferably 100 μm or less, still more preferably 70 μm or less, and particularly preferably 50 μm or less, and is, for example, 5 to 150 μm. The oriented film having such a thickness has an excellent balance between stiffness and strength as a substrate that constitutes packaging materials.

The biaxially oriented film of the present disclosure can be obtained by, for example, providing a material containing an ethylene-based polymer, forming a film including a layer made of the material by a known method (the film is hereinafter also referred to as "raw film"), and then biaxially stretching the raw film. The raw film can be obtained by, for example, a melt extrusion method such as a T-die casting method or an inflation molding method, and the T-die casting method is preferable from the viewpoint of being easy to produce the raw film having a thickness necessary for biaxial stretching.

Examples of a variety of known methods as a biaxial stretching method include a method in which biaxial stretching is performed simultaneously or sequentially in the longitudinal and transverse directions by a tenter method (flat method) and a method in which biaxial stretching is performed simultaneously in the longitudinal and transverse directions by a tubular method, and the method by the tenter method is preferable from the viewpoint of being easier to obtain a film having the above-described physical properties. A sequential biaxial stretching method in which the raw film is stretched in the MD direction with a heating roll and an obtained oriented film is then stretched in the TD direction with a tenter is more preferable.

In the case of the tenter method, the sequential biaxial stretching method is preferable, and a biaxially oriented film is obtained by, for example, stretching the raw film in the MD direction (longitudinal direction) within a temperature range of 90°C to 135°C and then stretching an obtained oriented film in the TD direction (transverse direction) within a temperature range of 90°C to 140°C. After the biaxial stretching, from the viewpoint of further reducing the heat shrinkage rate, for example, a heat fixation treatment may be performed within a temperature range of 80°C to 140°C as desired.

Regarding the stretch ratios, from the viewpoint of easy cuttability and productivity, the stretch ratios in the MD direction and in the TD direction are each independently preferably twice or more and more preferably three times or more and may be four times or more and is preferably 14 times or less, more preferably 12 times or less, and still more preferably 10 times or less, may be seven times or less, and is, for example, 2 to 14 times. In one embodiment, the stretch ratio in the MD direction is preferably 3 to 7 times, and the stretch ratio in the TD direction is preferably 4 to 10 times. Specifically, the sequential biaxial stretching method in which the raw film is stretched 3 to 7 times in the MD direction with a heating roll and an obtained oriented film is then stretched in the TD direction 4 to 10 times with a tenter is preferable.

An annealing treatment may be performed as necessary on the film after the biaxial stretching. The annealing treatment can be performed by, for example, bringing the film after the biaxial stretching into contact with a roll having a temperature adjusted to a predetermined temperature.

In order to improve printability or adhesion to other layers, for example, a surface activation treatment may be performed on the surface of the biaxially oriented film. Examples of the surface activation treatment include a corona treatment, a flame treatment, a plasma treatment, and an undercoat treatment.

The biaxially oriented film of the present disclosure can be used for a variety of applications. The biaxially oriented film of the present disclosure can be suitably used as, for example, a substrate that constitutes packaging materials and can be suitably used as a substrate that constitutes polyethylene-based mono-material packaging materials in particular.

[Materials]

The biaxially oriented film of the present disclosure includes, for example, a layer obtained from a material containing an ethylene-based polymer to be described below. The biaxially oriented film of the present disclosure may be, for example, a multilayer oriented film including a layer obtained from a material containing an ethylene-based polymer to be described below.

<Ethylene-based polymer>

In the present specification, the ethylene-based polymer refers to a polymer in which the proportion (content proportion) of the content of a constituent unit derived from ethylene in the total content of constituent units derived from polymerizable monomers is more than 50 mol%. The content proportion of the constituent unit derived from ethylene in the ethylene-based polymer is preferably 51 mol% or more, more preferably 60 mol% or more, still more preferably 70 mol% or more, far still more preferably 80 mol% or more, and particularly preferably 90 mol% or more, and among them, especially preferably 95 mol% or more. In the present specification, the content proportion of each constituent unit in a polymer is measured by nuclear magnetic resonance spectroscopy (NMR).

The ethylene-based polymer may be an ethylene homopolymer or a copolymer of ethylene and an additional polymerizable monomer (hereinafter also referred to as "ethylene-based copolymer"). Examples of the additional polymerizable monomer include $\alpha$-olefins having 3 or more carbon atoms. The ethylene-based copolymer is, for example, preferably a copolymer of ethylene and an $\alpha$-olefin having 3 or more carbon atoms (hereinafter also referred to as "ethylene/$\alpha$-olefin copolymer").

In the ethylene-based copolymer, the number of carbon atoms in the $\alpha$-olefin is preferably 3 to 20, more preferably 3 to 10, still more preferably 3 to 8, and particularly preferably 3 to 6. Examples of the $\alpha$-olefin include, for example, linear $\alpha$-olefins such as propylene, 1-butene, 1-hexene, 1-heptene, 1-octene, 1-decene, 1-dodecene, 1-tetradecene, 1-octadecene, 1-hexadecene, 1-heptadecene, 1-octadecene, and 1-eicosene; and branched $\alpha$-olefins such as 3-methyl-1-butene, 3-methyl-1-pentene, 3-ethyl-1-pentene, 4-methyl-1-pentene, 4,4-dimethyl-1-pentene, 4-methyl-1-hexene, 4,4-dimethyl-1-hexene, 4-ethyl-1-hexene, and 3-ethyl-1-hexene. Among these, from the viewpoint of a property of forming a copolymer with ethylene, a linear $\alpha$-olefin is preferable, and propylene, 1-butene, 1-hexene, and 1-octene are more preferable. The ethylene/$\alpha$-olefin copolymer may include one type or two or more types of constituent units derived from an $\alpha$-olefin.

Examples of the ethylene-based polymer include high-density polyethylene (HDPE) and low-density polyethylene. The density of the high-density polyethylene is normally 941 kg/m$^3$ or higher and lower than 970 kg/m$^3$. The density of the low-density polyethylene is normally lower than 941 kg/m$^3$, preferably 940 kg/m$^3$ or lower, and more preferably 935 kg/m$^3$ or lower, is normally 900 kg/m$^3$ or higher, preferably 910 kg/m$^3$ or higher, and more preferably 920 kg/m$^3$ or higher, and is, for example, 900 kg/m$^3$ or higher and lower than 941 kg/m$^3$.

Commercially available products may be used as any of the high-density polyethylene and the low-density polyethylene. The high-density polyethylene may be an ethylene homopolymer or an ethylene/$\alpha$-olefin copolymer (particularly preferably a copolymer of ethylene and an $\alpha$-olefin having 3 to 6 carbon atoms). The low-density polyethylene may be an ethylene homopolymer (for example, a high-pressure method low-density polyethylene) or an ethylene/$\alpha$-olefin copolymer (particularly preferably a copolymer of ethylene and an $\alpha$-olefin having 3 to 6 carbon atoms).

The ethylene-based polymer contained in the above-described materials may be, for example, one or more kinds of high-density polyethylene or a mixture of one or more kinds of high-density polyethylene and one or more kinds of low-density polyethylene.

The content proportion of the high-density polyethylene in the material is preferably 50 mass% or more, more preferably 60 mass% or more, still more preferably 70 mass% or more, far still more preferably 80 mass% or more, and particularly preferably 85 mass% or more from the viewpoint of being easier to exhibit the above-described effect.

In the mixture of high-density polyethylene and low-density polyethylene, the content proportion of the high-density polyethylene is preferably 50 to 99.9 mass%, more preferably 60 to 99 mass%, and still more preferably 70 to 99 mass%, and the content proportion of the low-density polyethylene is preferably 0.1 to 50 mass%, more preferably 1 to 40 mass%, and still more preferably 1 to 30 mass%.

The ethylene-based polymer may include a constituent unit derived from a biomass-derived monomer (for example, ethylene or $\alpha$-olefin). The ethylene-based polymer may include a constituent unit derived from a chemical recycling-derived monomer (for example, ethylene or $\alpha$-olefin).

The content proportion of the ethylene-based polymer in the material is preferably 50 mass% or more, more preferably 60 mass% or more, still more preferably 70 mass% or more, far still more preferably 80 mass% or more, and particularly preferably 90 mass% or more from the viewpoint of being easier to exhibit the above-described effect.

From the viewpoint of being easier to obtain a film having the above-described physical properties, the ethylene-based polymer preferably satisfies any one or more of requirements (A1) to (A3), which will be described below, and more preferably satisfies all of the requirements (A1) to (A3). The ethylene-based polymer preferably further satisfies a requirement (A4), which will be described below, in addition to any one or more of the requirements (A1) to (A3). The biaxially oriented film of the second aspect includes a layer obtained from a material containing an ethylene-based polymer satisfying all of the requirements (A1) to (A4). The use of such an ethylene-based polymer makes it possible to form, for example, a film having excellent biaxial stretchability in spite of a high density.

The ethylene-based polymer preferably further satisfies any one or more of requirements (A5) to (A6), which will be described below, in addition to any one or more of the requirements (A1) to (A3), which will be described below, and more preferably satisfies all of the requirements (A1) to (A3) and satisfies all of the requirements (A5) to (A6). The ethylene-based polymer preferably further satisfies the requirement (A4), which will be described below, and further satisfies any one or more of the requirements (A5) to (A6) in addition to any one or more of the requirements (A1) to (A3). The biaxially oriented film of the second aspect preferably includes a layer obtained from a material containing an ethylene-based polymer satisfying all of the requirements (A1) to (A4) and satisfying any one or more of the requirements (A5) and (A6).

In a case where the ethylene-based polymer is a mixture of two or more kinds of ethylene-based polymers, "ethylene-based polymer" in the following description of each requirement means the mixture of the ethylene-based polymers. That is, in a case where the material contains two or more kinds of the ethylene-based polymers, the mixture of two or more kinds of the ethylene-based polymers preferably satisfies any one or more of the requirements (A1) to (A3), more preferably satisfies all of the requirements (A1) to (A3), and still more preferably further satisfies the requirement (A4) in addition to any one or more of the requirements (A1) to (A3).

In addition, in a case where the material contains two or more kinds of the ethylene-based polymers, the mixture of two or more kinds of the ethylene-based polymers preferably satisfies any one or more of the requirements (A1) to (A3) and further satisfies any one or more of the requirements (A5) and (A6), more preferably satisfies all of the requirements (A1) to (A3) and satisfies all of the requirements (A5) and (A6), and still more preferably further satisfies the requirement (A4) and further satisfies any one or more of the requirements (A5) and (A6) in addition to any one of the requirements (A1) to (A3).

(Requirement (A1): MFR)

The melt flow rate (MFR) of the ethylene-based polymer is preferably 0.01 g/10 min or higher and 5.0 g/10 min or lower. The MFR is more preferably 4.0 g/10 min or lower, still more preferably 3.0 g/10 min or lower, far still more preferably 2.0 g/10 min or lower, particularly preferably 1.5 g/10 min or lower, and especially preferably 1.2 g/10 min or lower. The MFR of, for example, 1.0 g/10 min or lower, lower than 1.0 g/10 min, 0.8 g/10 min or lower, lower than 0.8 g/10 min, 0.5 g/10 min or lower, lower than 0.5 g/10 min, or 0.4 g/10 min or lower is also one aspect. The MFR of 0.01 to 1.0 g/10 min is also one aspect. The MFR is more preferably 0.02 g/10 min or higher, still more preferably 0.04 g/10 min or higher, and far still more preferably 0.1 g/10 min or higher. The MFR of 0.5 g/10 min or higher is also one aspect. The MFR of 0.5 to 1.2 g/10 min is also one aspect.

Ordinarily, biaxial stretching of a film made of high-density polyethylene tends to be difficult. For example, in the sequential biaxial stretching method, a film is stretched in the MD direction and then stretched in the TD direction, but the temperature of the film often decreases between these stretching processes. Therefore, the film is likely to tear, for example, in the MD direction when the film is stretched in the TD direction, and stretching tends to be difficult. In contrast, an ethylene-based polymer having an MFR that is equal to or lower than the above-described upper limit value tends to be capable of forming a film having excellent biaxial stretchability in spite of a high density. This is assumed to be because the ethylene-based polymer having an MFR that is equal to or lower than the above-described upper limit value contains a large amount of a high-molecular-weight polymer component, and the film is thus less likely to tear even when the film is stretched in the MD direction and then stretched in the TM direction in a state where the temperature of the film has been decreased. Therefore, such a film tends to be excellent in terms of sequential biaxial stretchability by a continuous tenter method. The ethylene-based polymer having an MFR that is equal to or higher than the above-described lower limit value tends to be excellent in terms of extrusion moldability.

The MFR of the ethylene-based polymer is measured under conditions of a temperature of 190°C and a load of 2.16 kg (kgf) in accordance with JIS K 7210.

The MFR of the ethylene-based polymer tends to depend on the molecular weight, and there is a tendency that the lower the MFR, the larger the molecular weight, and the higher the MFR, the smaller the molecular weight. The molecular weight of the ethylene-based polymer can be adjusted with the compositional ratio (hydrogen/ethylene) between hydrogen and ethylene in the polymerization system. Therefore, the MFR of the ethylene-based polymer can be increased by, for example, increasing the hydrogen/ethylene ratio in a polymerization reaction at the time of producing the ethylene-based polymer and can be decreased by, for example, decreasing the hydrogen/ethylene ratio. The MFR of the ethylene-based polymer can also be adjusted by changing the polymerization temperature.

(Requirement (A2): Density)

The density of the ethylene-based polymer is preferably 941 kg/m$^3$ or higher and lower than 970 kg/m$^3$. The density is more preferably 943 kg/m$^3$ or higher, still more preferably 945 kg/m$^3$ or higher, and particularly preferably 946 kg/m$^3$ or higher. The density is more preferably 965 kg/m$^3$ or lower, still more preferably 960 kg/m$^3$ or lower, and particularly preferably 956 kg/m$^3$ or lower. The density of 941 to 956 kg/m$^3$ is also one aspect.

A biaxially oriented film of a film including a layer formed of a material containing an ethylene-based polymer having a density that is equal to or higher than the above-described lower limit value tends to be excellent in terms of stiffness and low shrinkage. A film including a layer formed of a material containing an ethylene-based polymer having a density that is equal to or lower than the above-described upper limit value tends to be excellent in terms of biaxial stretchability.

The density of the ethylene-based polymer is measured by a density gradient tube method in accordance with JIS K 7112 using a strand that is obtained at the time of measuring the MFR. The details of the measurement conditions will be described in the Examples section.

The density of the ethylene-based polymer relies on, for example, the content proportion of a constituent unit derived from an $\alpha$-olefin having 3 or more carbon atoms (hereinafter also referred to as "$\alpha$-olefin content"), the smaller the $\alpha$-olefin content, the higher the density tends to be, and the larger the $\alpha$-olefin content, the lower the density tends to be.

(Requirement (A3): Melt tension)

The melt tension of the ethylene-based polymer is preferably 31 to 250 mN. That is, the melt tension is preferably 31 mN or more and 250 mN or less. The melt tension is more preferably 35 mN or more, 40 mN or more, or 45 mN or more. The melt tension of 61 mN or more, 80 mN or more, or 90 mN or more is also one aspect. The melt tension is more preferably 240 mN or less, still more preferably 230 mN or less, far still more preferably 200 mN or less, and particularly preferably 170 mN or less. The melt tension of 120 mN or less is also one aspect. The melt tension of 35 to 120 mN or 40 to 120 mN is also one aspect.

Ordinarily, biaxial stretching of a film made of high-density polyethylene tends to be difficult. For example, in the sequential biaxial stretching method, a film is stretched in the MD direction and then stretched in the TD direction, but the temperature of the film often decreases between these stretching processes. Therefore, the film is likely to tear, for example, in the MD direction when the film is stretched in the TD direction, and stretching tends to be difficult.

In contrast, an ethylene-based polymer having a melt tension that is equal to or more than the above-described lower limit value tends to be capable of forming a film having excellent biaxial stretchability in spite of a high density. This is assumed to be because the ethylene-based polymer having a melt tension that is equal to or more than the lower limit value is considered to contain a large number of molecules that exist over one crystal portion and another crystal portion in an amorphous portion (that is, tie molecules) and is capable of suppressing the film tearing, for example, in the MD direction when the film is stretched in the TD direction and the ethylene-based polymer having a melt tension that is equal to or more than the lower limit value is capable of suppressing film sagging at the time of forming the film. Therefore, such a film tends to be excellent in terms of sequential biaxial stretchability by a continuous tenter method. The ethylene-based polymer having a melt tension that is equal to or lower than the upper limit value tends to be capable of forming a film having excellent transparency.

The melt tension of the ethylene-based polymer is measured at a resin temperature of 190°C, and the details of a measurement method thereof will be described in the Examples section.

The melt tension of the ethylene-based polymer can be adjusted with, for example, the MFR, molecular weight, or molecular weight distribution (Mw/Mn) of the ethylene-based polymer. As an example, the melt tension can be increased by increasing the molecular weight distribution.

(Requirement (A4): Mw/Mn)

The Mw/Mn of the ethylene-based polymer is preferably 6.1 or more, more preferably 7 or more, and still more preferably 8 or more. The Mw/Mn of 10 or more, 15 or more, or 20 or more is also one aspect. The upper limit value of the Mw/Mn of the ethylene-based polymer is not particularly limited. The Mw/Mn of the ethylene-based polymer may be, for example, 50 or less or 45 or less. The Mw/Mn of 12 or less is also one aspect. The Mw/Mn of the ethylene-based polymer is, for example, 6.1 or more and 50 or less or 7 or more and 50 or less. The Mw/Mn of 7 or more and 12 or less is also one aspect.

The ethylene-based polymer having a Mw/Mn that is equal to or more than the lower limit value contains a high-molecular-weight polymer component and thus tends to be capable of forming a film having excellent biaxial stretchability. This is assumed to be because there are a large number of tie molecules derived from the high-molecular-weight polymer component and it is thus possible to suppress the film tearing, for example, in the MD direction when the film is stretched in the TD direction. In addition, this is also assumed to be because there is a large amount of the high-molecular-weight polymer component, and the melt tension thus becomes high, and it is possible to suppress film sagging at the time of forming the film. The ethylene-based polymer having a Mw/Mn that is equal to or lower than the upper limit value tends to be capable of forming a film having excellent transparency.

The Mw/Mn is the ratio of the weight average molecular weight (Mw) to the number average molecular weight (Mn) that are each measured by gel permeation chromatography (GPC), and is a molecular weight distribution. Mw and Mn are each a value in terms of polyethylene. The details of a measuring instrument and measurement conditions are as described in the Examples section. In addition, the molecular weight is calculated based on a conversion method after a calibration curve is prepared using commercially available monodisperse polystyrene.

The Mw/Mn of the ethylene-based polymer can be increased by, for example, producing the ethylene-based polymer by a multi-stage polymerization process or mixing two or more kinds of ethylene-based polymers having different average molecular weights.

The ethylene-based polymer can be produced using, for example, a known catalyst such as a Ziegler-Natta catalyst or a metallocene catalyst. In addition, the ethylene-based polymer may also be produced by a continuous multi-stage polymerization process using a plurality of polymerization vessels. A commercially available product may be used as the ethylene-based polymer. For example, polyethylene satisfying the above-described requirements may be selected from commercially available polyethylene and used.

(Requirement (A5): Semi-melting temperature width)

The semi-melting temperature width of the ethylene-based polymer is preferably 5.5°C or higher, more preferably 6.0°C or higher, and still more preferably 6.5°C or higher. The semi-melting temperature width of 7.0°C or higher or 7.5°C or higher is also one aspect. The ethylene-based polymer having such a semi-melting temperature width is less likely to cause stretch rupture or melt sagging and tends to allow the film to be, for example, stably stretched in the TD direction after being stretched in the MD direction.

The upper limit value of the semi-melting temperature width of the ethylene-based polymer is not particularly limited. The semi-melting temperature width of the ethylene-based polymer is preferably 50°C or lower, more preferably 40°C or lower, still more preferably 30°C or lower, and particularly preferably 25°C or lower. The ethylene-based polymer having such a semi-melting temperature width tends to be excellent in terms of heat resistance and stiffness.

The semi-melting temperature width of the ethylene-based polymer is, for example, 5.5°C to 50°C.

The semi-melting temperature width is expressed as a difference ($T_{70}$ - $T_{30}$) between a temperature ($T_{30}$) at which the proportion of the heat of fusion in $\Delta H$ is 30% and a temperature ($T_{70}$) at which the proportion is 70%, wherein $\Delta H$ represents the total amount of heat of fusion of the entire ethylene-based polymer, which is obtained by differential scanning calorimetry (DSC). The details of the measurement conditions will be described in the Examples section.

(Requirement (A6) : $I_{21}/I_2$)

$I_{21}/I_2$ is the ratio of the melt index ($I_{21}$ : 190°C, 21.6 kg load) to the melt index ($I_2$ : 190°C, 2.16 kg load) of the ethylene-based polymer. $I_{21}$ and $I_2$ are each measured under a condition of a temperature of 190°C in accordance with JIS K 7210.

The $I_{21}/I_2$ of the ethylene-based polymer is not particularly limited, but is preferably 35 to 300. The $I_{21}/I_2$ is more preferably 37 or more and still more preferably 40 or more. The ethylene-based polymer having such $I_{21}/I_2$ tends to be excellent in terms of formability. The $I_{21}/I_2$ is more preferably 250 or less, still more preferably 200 or less, far still more preferably 150 or less, and particularly preferably 100 or less. The $I_{21}/I_2$ of 70 or less is also one aspect. The ethylene-based polymer having such $I_{21}/I_2$ tends to be excellent in terms of transparency. The $I_{21}/I_2$ of 40 to 70 is also one aspect.

For example, the ethylene-based polymer having
an MFR of 0.5 to 1.2 g/10 min, and satisfying one or more requirements selected from the group consisting of

> a melt tension of 40 to 120 mN,
> Mw/Mn of 7 to 12, and
> $I_{21}/I_2$ of 40 to 70

is also one aspect.

For example, the ethylene-based polymer having
a melt tension of 40 to 120 mN, and satisfying one or more requirements selected from the group consisting of

> Mw/Mn of 7 to 12, and
> $I_{21}/I_2$ of 40 to 70

is also one aspect.

For example, the ethylene-based polymer having Mw/Mn of 7 to 12 and $I_{21}/I_2$ of 40 to 70 is also one aspect.

<Additional polymer>

The material may further contain a polymer other than the ethylene-based polymer (hereinafter also referred to as "additional polymer"). Examples of the additional polymer include thermoplastic resins other than ethylene-based polymers. Examples of the thermoplastic resins include olefin-based polymers other than the ethylene-based polymers, (meth)acrylic resins, polyvinyl chloride, polystyrene, polyester, polyamide, polyimide, polyacetal, polyvinyl alcohol, polyacrylonitrile, and polycarbonate.

Among the additional polymers, olefin-based polymers are preferable. Examples of the olefin-based polymers include propylene-based polymers, butene-based polymers, 4-methyl-1-pentene-based polymers, 3-methyl-1-butene-based polymers, and hexene-based polymers, and propylene-based polymers are preferable. The material containing the propylene-based polymer together with the ethylene-based polymer tends to be excellent in terms of the adhesion of the raw film to a chill roll at the time of forming the raw film before stretching, and the raw film obtained tends to be high in surface smoothness (the surface roughness is small). Therefore, the appearance of the resulting biaxially oriented film tends to be excellent.

In the present specification, the propylene-based polymer refers to a polymer in which the proportion (content proportion) of the content of a constituent unit derived from propylene in the total content of constituent units derived from polymerizable monomers is more than 50 mol%. The content proportion of the constituent unit derived from propylene in the propylene-based polymer is preferably 51 mol% or more, more preferably 60 mol% or more, still more preferably 70 mol% or more, far still more preferably 80 mol% or more, and particularly preferably 90 mol% or more, and among them, especially preferably 95 mol% or more.

The propylene-based polymer may be a propylene homopolymer or a copolymer of propylene and an additional polymerizable monomer (hereinafter also referred to as "propylene-based copolymer"). Examples of the additional polymerizable monomer include α-olefins having 2 or more carbon atoms (here, propylene is excluded). The propylene-based copolymer is, for example, preferably a copolymer of propylene and an α-olefin having 2 or more carbon atoms (hereinafter also referred to as "propylene/α-olefin copolymer").

In the propylene-based copolymer, the number of carbon atoms in the α-olefin is preferably 2 to 20, more preferably 2 to 10, still more preferably 2 to 8, and particularly preferably 2 to 6. Examples of α-olefins other than propylene include, linear α-olefins such as ethylene, 1-butene, 1-hexene, 1-heptene, 1-octene, 1-decene, 1-dodecene, 1-tetradecene, 1-octadecene, 1-hexadecene, 1-heptadecene, 1-octadecene, and 1-eicosene; and branched α-olefins such as 3-methyl-1-butene, 3-methyl-1-pentene, 3-ethyl-1-pentene, 4-methyl-1-pentene, 4,4-dimethyl-1-pentene, 4-methyl-1-hexene, 4,4-dimethyl-1-hexene, 4-ethyl-1-hexene, and 3-ethyl-1-hexene. Among these, from the viewpoint of copolymerizability with propylene, a linear α-olefin is preferable, and ethylene, 1-butene, 1-hexene, and 1-octene are more preferable. The propylene/α-olefin copolymer may include one type or two or more types of constituent units derived from an α-olefin other than propylene.

The propylene-based copolymer may be a propylene-based random copolymer or a propylene-based block copolymer. Specific examples of the propylene-based copolymer include propylene/ethylene copolymers, propylene/1-butene copolymers, and propylene/ethylene/1-butene copolymers.

The melt flow rate (MFR) of the propylene-based polymer is preferably 0.01 to 100 g/10 min, more preferably 0.1 to 50 g/10 min, still more preferably 0.5 to 30 g/10 min, and particularly preferably 1 to 10 g/10 min. The MFR of the propylene-based polymer is measured under conditions of a temperature of 230°C and a load of 2.16 kg (kgf) in accordance with JIS K 7210.

The propylene-based polymer may include a constituent unit derived from a biomass-derived monomer (for example, propylene or $\alpha$-olefin). The propylene-based polymer may include a constituent unit derived from a chemical recycling-derived monomer (for example, propylene or $\alpha$-olefin).

In a case where the material contains the additional polymer, the content of the ethylene-based polymer is, per 100 parts by mass of the sum of the contents of the ethylene-based polymer and the additional polymer, preferably 50 parts by mass or more, more preferably 60 parts by mass or more, still more preferably 70 parts by mass or more, far still more preferably 80 parts by mass or more, and particularly preferably 90 parts by mass or more, and is preferably 99.9 parts by mass or less and more preferably 99 parts by mass or less, and is, for example, 50 to 99.9 parts by mass.

In a case where the material contains the additional polymer, the content of the additional polymer is, per 100 parts by mass of the sum of the contents of the ethylene-based polymer and the additional polymer, preferably 0.1 parts by mass or more and more preferably 1 part by mass or more, and is preferably 50 parts by mass or less, more preferably 40 parts by mass or less, still more preferably 30 parts by mass or less, far still more preferably 20 parts by mass or less, and particularly preferably 10 parts by mass or less, and is, for example, 0.1 to 50 parts by mass.

The additional polymer is preferably a propylene-based polymer.

<Additives>

The material may contain an additive that can be added to ordinary polyolefin-based resin compositions. Examples of the additive include a nucleating agent, a weather stabilizer, a heat stabilizer, an antistatic agent, an antifogging agent, an antiblocking agent, a slip agent, a lubricant, a pigment, a dripping agent, and a nucleating agent.

The content of the additive in the material is preferably 10 parts by mass or less, more preferably 5 parts by mass or less, and still more preferably 1 part by mass or less relative to 100 parts by mass of the ethylene-based polymer.

The material containing the ethylene-based polymer can be prepared by a conventionally known method. The material may be prepared by, for example, mixing each of the above-described components by dry blending or may be prepared by performing dry blending and then performing melt kneading and, furthermore, an operation such as granulation as necessary. Examples of a dry blending method include methods in which a Henschel mixer, tumbler blender, or V-blender is used. Examples of a melt kneading method include methods in which a single-screw extruder, a multi-screw extruder, or a Banbury mixer is used.

<Multilayer oriented film>

The biaxially oriented film of the present disclosure may be a multilayer oriented film including at least one layer made of the material containing the ethylene-based polymer that satisfies the above-described requirements (hereinafter also referred to as "ethylene-based polymer material"), and the ratio of the thickness of each layer is not particularly limited. The number of layers in the multilayer oriented film may be, for example, 2 to 11, 3 to 9, 3 to 7, or 3 to 5.

The configuration of the multilayer oriented film is not particularly limited, and examples thereof include configurations (1a) to (6a) to be described below. In the following configurations, for example, the description "ethylene-based polymer material/low-density polyethylene or high-density polyethylene/ethylene-based polymer material" means a multilayer oriented film including a layer formed of the ethylene-based polymer material, a layer formed of the low-density polyethylene or high-density polyethylene, and a layer formed of the ethylene-based polymer material in this order in the lamination direction.

(1a) Ethylene-based polymer material/low-density polyethylene or high-density polyethylene/ethylene-based polymer material

(2a) Ethylene-based polymer material/low-density polyethylene or high-density polyethylene/low-density polyethylene or high-density polyethylene

(3a) Low-density polyethylene or high-density polyethylene/ethylene-based polymer material/low-density polyethylene or high-density polyethylene

(4a) Low-density polyethylene or high-density polyethylene/ethylene-based polymer material/low-density polyethylene or high-density polyethylene/ethylene-based polymer material/low-density polyethylene or high-density polyethylene

(5a) Ethylene-based polymer material/low-density polyethylene or high-density polyethylene/ethylene-based polymer material/low-density polyethylene or high-density polyethylene/ethylene-based polymer material

(6a) Ethylene-based polymer material/low-density polyethylene or high-density polyethylene/ethylene-based polymer material/low-density polyethylene or high-density polyethylene/low-density polyethylene or high-density polyethylene

A method for producing the biaxially oriented film of the present disclosure is not particularly limited, and examples thereof include methods in which a film (raw film to be stretched) obtained by a known melt extrusion method is stretched. The film (raw film to be stretched) may be a multilayer film. A method for producing the multilayer film (raw film to be stretched) is not particularly limited, and examples thereof include a coextrusion method.

[Laminate]

A laminate of the present disclosure includes a layer made of the above-described biaxially oriented film of the present disclosure. The laminate of the present disclosure may include a plurality of layers made of the biaxially oriented film. The laminate of the present disclosure can be suitably used as, for example, a packaging material.

The configuration of the laminate of the present disclosure is not particularly limited, and examples thereof include configurations (1b) to (10b) to be described below. "PE laminated" in the following configurations means an ethylene-based resin being laminated by extrusion lamination. "Biaxially oriented film" means the biaxially oriented film of the present disclosure. "Non-oriented HDPE film" means a non-oriented high-density polyethylene film.

In the following configurations, for example, the description "biaxially oriented film/adhesive/non-oriented HDPE film/adhesive/non-oriented low-density polyethylene film" means a laminate including a biaxially oriented film, an adhesive layer, a non-oriented HDPE film, an adhesive layer, and a non-oriented low-density polyethylene film in this order in the lamination direction.

(1b) Biaxially oriented film/adhesive/non-oriented HDPE film/adhesive/non-oriented low-density polyethylene film

(2b) Biaxially oriented film/PE laminated

(3b) Biaxially oriented film/PE laminated/non-oriented low-density polyethylene film

(4b) Biaxially oriented film/adhesive/PE laminated/non-oriented low-density polyethylene film

(5b) Biaxially oriented film/PE laminated/non-oriented HDPE film/adhesive/non-oriented low-density polyethylene film (6b) Biaxially oriented film/adhesive/PE laminated/non-oriented HDPE film/adhesive/non-oriented low-density polyethylene film

(7b) Biaxially oriented film/adhesive/non-oriented low-density polyethylene film/adhesive/non-oriented low-density polyethylene film

(8b) Biaxially oriented film/adhesive/non-oriented low-density polyethylene film/adhesive/biaxially oriented film/PE laminated

(9b) Biaxially oriented film/adhesive/non-oriented HDPE film/PE laminated

(10b) Biaxially oriented film/adhesive/non-oriented HDPE film/PE laminated/non-oriented low-density polyethylene film

To the biaxially oriented film of the present disclosure and/or the film being laminated, a variety of functions can be further imparted by the following method. Examples of the method include a method in which the film is coextruded with a barrier resin (for example, an ethylene/vinyl alcohol copolymer (EVOH), nylon (Ny)) or an adhesive resin (for example, ADMER) and a method in which a surface layer is coated (for example, a vapor deposited film). The vapor deposited film may be, for example, a film composed of a metal or a film composed of an inorganic oxide.

Examples of the metal that constitutes a metal vapor deposited film include aluminum, chromium, tin, nickel, copper, silver, gold, and platinum. Examples of the inorganic oxide include aluminum oxide, silicon oxide, magnesium oxide, calcium oxide, zirconium oxide, titanium oxide, boron oxide, hafnium oxide, and barium oxide.

The laminate of the present disclosure preferably includes the biaxially oriented film as a substrate.

The laminate of the present disclosure may include the biaxially oriented film as a substrate and a sealant layer. Such a laminate is suitable as a packaging material. The sealant layer contains, for example, a thermoplastic resin as a main component. Examples of the thermoplastic resin include polyolefins such as polyethylene and polypropylene. The main component refers to a component the content proportion of which in the layer is 50 mass% or more, preferably 60 mass% or more, more preferably 70 mass% or more, and still more preferably 80 mass% or more.

The sealant layer may be a non-oriented film or an oriented film.

The laminate of the present disclosure may be produced by, for example, laminating the biaxially oriented film of the present disclosure and a sealant film that corresponds to the sealant layer by a lamination treatment using an adhesive or may be produced by laminating the biaxially oriented film and a sealant film by an extrusion lamination treatment using an adhesive resin composition.

The laminate of the present disclosure may include the biaxially oriented film as a substrate and a sealant layer containing polyethylene as a main component. Such a laminate is suitable as a polyethylene-based mono-material packaging material.

The laminate of the present disclosure may be a packaging material. A bag-shaped container having an opening portion can be produced by, for example, heat-sealing the packaging material. The bag-shaped container is filled with an item to be packaged (content) for a variety of applications, and the opening portion is heat-sealed, whereby a packaged body can be obtained.

[Aspects of present disclosure]

The present disclosure relates to, for example, the following [1] to [16].

[1] A biaxially oriented film, including a layer obtained from a material containing an ethylene-based polymer, wherein the ethylene-based polymer has a melt flow rate (MFR) of 0.01 g/10 min or higher and 5.0 g/10 min or lower, a density of 941 kg/m$^3$ or higher and lower than 970 kg/m$^3$, and a melt tension of 31 to 250 mN, and Mw/Mn of the ethylene-based polymer is 6.1 or more, the Mw/Mn being a ratio of a weight-average molecular weight (Mw) to a number-average molecular weight (Mn) that are each measured by gel permeation chromatography (GPC).

[2] The biaxially oriented film according to [1], wherein the material further contains a propylene-based polymer, and per 100 parts by mass of the sum of contents of the ethylene-based polymer and the propylene-based polymer in the material, the content of the ethylene-based polymer is 50 to 99 parts by mass, and the content of the propylene-based polymer is 1 to 50 parts by mass.

[3] The biaxially oriented film according to [2], wherein the material contains, as the propylene-based polymer, at least one selected from the group consisting of a propylene homopolymer and a random copolymer of propylene and an α-olefin having 2 to 8 carbon atoms (excluding propylene).

[4] The biaxially oriented film according to any one of [1] to [3], wherein a stretch ratio in a MD direction is twice or more, and a stretch ratio in a TD direction is twice or more.

[5] A biaxially oriented film obtained from a material containing an ethylene-based polymer, wherein a tensile modulus in a MD direction is 1,000 MPa or more, a tensile modulus in a TD direction is 1,500 MPa or more, a dart impact is 100 g or more, a heat shrinkage rate in the MD direction is 15% or less, and a heat shrinkage rate in the TD direction is 15% or less.

[6] The biaxially oriented film according to [5], wherein a tear strength in the MD direction and a tear strength in the TD direction that are measured by an Elmendorf tear method are each independently 1 N or lower.

[7] The biaxially oriented film according to [5] or [6], wherein a total haze is 50% or less.

[8] A laminate including a layer made of the biaxially oriented film according to any one of [1] to [7].

[9] A packaging material including a layer made of the biaxially oriented film according to any one of [1] to [7].

[10] A method for producing a biaxially oriented film, including: a step of providing a material containing an ethylene-based polymer having a melt flow rate (MFR) of 0.01 g/10 min or higher and 5.0 g/10 min or lower, a density of 941 kg/m$^3$ or higher and lower than 970 kg/m$^3$, a melt tension of 31 to 250 mN, and Mw/Mn of 6.1 or more, the Mw/Mn being a ratio of a weight-average molecular weight (Mw) to a number-average molecular weight (Mn) that are each measured by gel permeation chromatography (GPC); a step of forming a film using at least the material; and a step of biaxially stretching the film.

[11] The method for producing a biaxially oriented film according to [10], wherein the film is formed using at least the material by a T-die casting method.

[12] The method for producing a biaxially oriented film according to [10] or [11], wherein the film is biaxially stretched under conditions of a stretch ratio in a MD direction of twice or more and a stretch ratio in a TD direction of twice or more.

[13] The method for producing a biaxially oriented film according to any one of [10] to [12], wherein the film is sequentially biaxially stretched by a tenter method.

[14] The method for producing a biaxially oriented film according to any one of [10] to [13], wherein the production method is continuously performed.

[15] The method for producing a biaxially oriented film according to any one of [10] to [14], wherein the material further contains a propylene-based polymer, and per 100 parts by mass of the sum of contents of the ethylene-based polymer and the propylene-based polymer in the material, the content of the ethylene-based polymer is 50 to 99 parts by mass, and the content of the propylene-based polymer is 1 to 50 parts by mass.

[16] The method for producing a biaxially oriented film according to [15], wherein the material contains, as the propylene-based polymer, at least one selected from the group consisting of a propylene homopolymer and a random copolymer of propylene and an α-olefin having 2 to 8 carbon atoms (excluding propylene).

Examples

Hereinafter, the biaxially oriented film of the present disclosure will be more specifically described based on Examples, but the biaxially oriented film of the present disclosure is not limited by Examples below. In Examples, Reference Examples, and Comparative Examples below, "parts" indicates "parts by mass."

[Polymers]

Polymers used in Examples, Reference Examples, and Comparative Examples below will be described below.

<Ethylene-based polymer>

Ethylene-based polymer A: HI-ZEX 7000F, manufactured by Prime Polymer Co., Ltd., MFR: 0.04 g/10 min, density: 952 kg/m$^3$, melt tension: 226 mN, Mw/Mn: 42, semi-melting temperature width: 7.4°C, $I_{21}/I_2$: 178
Ethylene-based polymer B: HI-ZEX GE100, manufactured by Prime Polymer Co., Ltd., MFR: 0.09 g/10 min, density: 954 kg/m$^3$, melt tension: 161 mN, Mw/Mn: 41, semi-melting temperature width: 6.5°C
Ethylene-based polymer C: HI-ZEX GE200, manufactured by Prime Polymer Co., Ltd., MFR: 0.19 g/10 min, density: 952 kg/m$^3$, melt tension: 131 mN, Mw/Mn: 23, semi-melting temperature width: 7.1°C
Ethylene-based polymer D: HI-ZEX GE300, manufactured by Prime Polymer Co., Ltd., MFR: 1.0 g/10 min, density: 947 kg/m$^3$, melt tension: 51 mN, Mw/Mn: 8.6, semi-melting temperature width: 12.3°C, $I_{21}/I_2$: 58
Ethylene-based polymer E: HI-ZEX 5000SF, manufactured by Prime Polymer Co., Ltd., MFR: 0.69 g/10 min, density: 955 kg/m$^3$, melt tension: 54 mN, Mw/Mn: 9.7, semi-melting temperature width: 6.9°C
Ethylene-based polymer F: HI-ZEX GE410, manufactured by Prime Polymer Co., Ltd., MFR: 1.3 g/10 min, density: 952 kg/m$^3$, melt tension: 35 mN, Mw/Mn: 6.1, semi-melting temperature width: 5.7°C
Ethylene-based polymer G: EVOLUE H SP4505, manufactured by Prime Polymer Co., Ltd., MFR: 0.4 g/10 min, density: 944 kg/m$^3$, melt tension: 60 mN, Mw/Mn: 6.0
Ethylene-based polymer H: HI-ZEX 3300F, manufactured by Prime Polymer Co., Ltd., MFR: 1.1 g/10 min, density: 950 kg/m$^3$, melt tension: 28 mN, Mw/Mn: 6.2, semi-melting temperature width: 6.4°C, $I_{21}/I_2$: 32
Ethylene-based polymer I: EVOLUE SP3022, manufactured by Prime Polymer Co., Ltd., MFR: 1.6 g/10 min, density: 927 kg/m$^3$, melt tension: 65 mN, Mw/Mn: 8.5
Ethylene-based polymer J: HI-ZEX 3600F, manufactured by Prime Polymer Co., Ltd., MFR: 1.0 g/10 min, density: 958 kg/m$^3$, melt tension: 30 mN, Mw/Mn: 6.3

In all of the above-described ethylene-based polymers A to J, the proportions (content proportion) of the content of a constituent unit derived from ethylene in the total content of constituent units derived from polymerizable monomers are 51 mol% or more.

<Propylene-based polymer>

Propylene-based polymer A: PRIME POLYPRO F327, manufactured by Prime Polymer Co., Ltd., random polypropylene

In the propylene-based polymer A, the proportion (content proportion) of the content of a constituent unit derived from propylene in the total content of constituent units derived from polymerizable monomers is 51 mol% or more.

[Measurement methods]

In Examples and Comparative Examples below, the melt flow rate (MFR), the density, the melt tension, the molecular weight distribution (Mw/Mn), the semi-melting temperature width, the melt index ratio ($I_{21}/I_2$), the tensile modulus, the dart impact, the heat shrinkage rate, the tear strength, and the total haze were measured as described below.

<Melt flow rate (MFR)>

The melt flow rate (MFR, unit: g/10 min) of the ethylene-based polymer was measured under conditions of a temperature of 190°C and a load of 2.16 kg (kgf) in accordance with JIS K 7210.

<Density>

The density (unit: kg/m$^3$) was measured by a density gradient tube method at 23°C in accordance with JIS K 7112 using a strand that was obtained at the time of measuring the MFR.

<Melt tension>

The melt tension was determined by measuring the stress at the time of stretching a molten filament at a constant speed. The stress was measured using a capillary rheometer: CAPILOGRAPH 1B (manufactured by Toyo Seiki Seisaku-sho, Ltd.). Regarding the measurement conditions, the resin temperature was set to 190°C, the melting time was set to six minutes, the barrel diameter was set to 9.55 mm$\varphi$, the extrusion speed was set to 15 mm/min, the winding speed was set to 24 m/minute (in a case where the molten filament was broken, the measurement was conducted while decreasing the winding speed stepwise by 5 m/minute), the nozzle diameter was set to 2.095 mm$\varphi$, and the nozzle length was set to 8 mm.

<Molecular weight distribution (Mw/Mn)>

The weight average molecular weight (Mw) and number average molecular weight (Mn) of each polymer were measured by gel permeation chromatography (GPC) and calculated in terms of polyethylene. The molecular weight distribution (Mw/Mn) was calculated from the obtained Mw and Mn. The measurement conditions of GPC are as described below.

(Measurement conditions)

    Measuring instrument: Gel permeation chromatograph GPC/HT type (manufactured by Tosoh Corporation)
    Analysis software: Data processing software Empower 3 (manufactured by Waters Corporation)
    Columns: 2 × TSKgel GMH6-HT + 2 × TSKgel GMH6-HTL (all were 7.5 mm in inner diameter and 30 cm in length, manufactured by Tosoh Corporation)
    Column temperature: 140°C
    Mobile phase: o-Dichlorobenzene (containing 0.025 mass% of BHT)
    Detector: Differential refractometer
    Flow rate: 1.0 mL/minute
    Sample concentration: 0.1% (w/v)
    Injection volume: 400 $\mu$L
    Sampling time interval: 0.5 seconds
    Column calibration: Monodisperse polystyrene (manufactured by Tosoh Corporation)
    Molecular weight conversion: Polyethylene conversion/general-purpose calibration method

<Semi-melting temperature width>

Regarding the ethylene-based polymers, DSC measurement was performed as described below. A sample of the ethylene-based polymer was heated up to 230°C from -30°C at a rate of 10°C/minute in a nitrogen atmosphere using a differential scanning calorimeter, held at 230°C for 10 minutes, then, cooled to -30°C at a rate of 10°C/minute, and held at -30°C for one minute. Next, the sample was heated up to 230°C at a rate of 10°C/minute.
The semi-melting temperature width is a difference ($T_{70}$ - $T_{30}$) between a temperature ($T_{30}$) at which the proportion of the heat of fusion in $\Delta H$ is 30% and a temperature ($T_{70}$) at which the proportion is 70%, wherein $\Delta H$ represents the total amount of heat of fusion that is measured at the time of the second heating in the DSC measurement.

Specifically, in a DSC curve at the time of the second heating, a baseline was drawn in a temperature region from 20°C to 150°C, the value of the baseline was subtracted from the DSC curve, the remaining area was defined as the total heat of fusion ($\Delta H$), and the difference between a temperature at which the area was 30% and a temperature at which the area was 70% was calculated.

<Melt index ratio ($I_{21}/I_2$)>

The melt index ($I_{21}$, unit: g/10 min) of the ethylene-based polymer was measured under conditions of a temperature of 190°C and a load of 21.6 kg (kgf) in accordance with JIS K 7210. The melt index ($I_2$, unit: g/10 min) of the ethylene-based polymer was measured under conditions of a temperature of 190°C and a load of 2.16 kg (kgf) in accordance with JIS K 7210. The melt index ratio ($I_{21}/I_2$) was calculated from these.

<Tensile modulus>

A test piece was obtained by punching out a dumbbell having a size in accordance with JIS K 6781 from each of the oriented films obtained in Examples, Reference Examples, and Comparative Examples. A test piece obtained by punching out in which the longer direction of the dumbbell becomes parallel to the MD direction (take-up direction) of the oriented film is referred to as a MD test piece, and a tensile modulus obtained using the MD test piece is defined as the tensile modulus in the MD direction. A test piece obtained by punching out in which the longer direction of the dumbbell is orthogonal to the MD direction of the oriented film is referred to as a TD test piece, and a tensile modulus obtained using the TD test piece is defined as the tensile modulus in the TD direction. Each test piece was set between air chucks of a universal material testing machine, a tensile test was performed under conditions of a temperature of 23°C, an inter-chuck distance of 80 mm, and a tensile speed of 200 mm/minute, and strain and stress (MPa) were plotted along the horizontal axis and the vertical axis, respectively, to obtain a stress-strain curve. In this stress-strain curve, the average value of the slopes of tangent lines within a strain of 1% to 3% was defined as the tensile modulus.

<Dart impact (dart impact strength)>

The dart impact was measured under the following conditions in accordance with the method A of ASTM D1709. A test specimen was clamped by a pneumatic clamping method, a dart with a hemispherical diameter was dropped from a certain height position, and a load at which 50% of the test specimen broke was read out from a graph. The number of times of dropping per level was set to 10 times.

<Heat shrinkage rate>

The oriented film was cut to a strip shape that was 10 mm in width and 100 mm in length to obtain a MD test piece and a TD test piece. Each test piece was put into an air oven at 120°C and heated for 15 minutes to confirm the length of the test piece. The heat shrinkage rates in the MD direction and in the TD direction were calculated based on the above-described formula.

<Tear strength>

The tear strength of the oriented film was measured by the Elmendorf tear method in accordance with JIS K 7128 using an Elmendorf tear strength tester (manufactured by Toyo Seiki Seisaku-sho, Ltd.) in an environment of a temperature of 23°C. In a case where a cut is made along the MD direction of the oriented film, the tear strength is defined as the tear strength in the MD direction, and in a case where a cut is made along the TD direction of the oriented film, the tear strength is defined as the tear strength in the TD direction.

<Total haze>

The total haze was measured using a haze meter in accordance with JIS K 7136.

<Chill roll adhesion and film appearance>

A situation in which the film uniformly adhered to a chill roll in the TD direction and there was no polka dot pattern derived from poor adhesion to the chill roll was rated as "A," and a situation in which part of the film did not adhere to the chill roll in the TD direction and there was a polka dot pattern in part of the portion in which the film did not adhere to the chill roll was rated as "B."

[Example 1]

The ethylene-based polymer A ("HI-ZEX 7000F" manufactured by Prime Polymer Co., Ltd.) was melt-kneaded with an extruder at 250°C, and an 800 μm-thick raw film was produced with a sheet forming machine. This raw film was uniaxially stretched in the longitudinal direction (MD direction) at a stretch ratio of five times while being heated with a roll at 134°C to obtain a uniaxially oriented film. The obtained uniaxially oriented film was stretched in the transverse direction (TD direction) at a stretch ratio of seven times while being heated with a tenter at 136°C. The physical properties of an obtained biaxially oriented film were measured. The results are shown in Table 1. In Example 1, it was possible to continuously perform biaxial stretching.

[Examples 2 to 10 and Comparative Examples 1 to 4]

Biaxially oriented films were produced in the same manner as in Example 1 except that one or more conditions selected from a polymer used, the stretch ratio, and the stretching temperature were changed as shown in Table 1. In Examples 2 to 10 and Comparative Example 3, it was possible to continuously perform biaxial stretching. In Comparative Examples 1, 2, and 4, it was not possible to continuously perform biaxial stretching.

In Example 7, a mixture of 70 parts of the ethylene-based polymer A and 30 parts of the propylene-based polymer A was used as the material. In Comparative Example 4, a mixture of 85 parts of the ethylene-based polymer J and 15 parts of the propylene-based polymer A was used as the material.

[Reference Example 1]

The ethylene-based polymer A ("HI-ZEX 7000F" manufactured by Prime Polymer Co., Ltd.) was melt-kneaded with an extruder at 250°C, and a 250 $\mu$m-thick raw film was produced with an inflation forming machine. This raw film was uniaxially stretched in the longitudinal direction (MD direction) at a stretch ratio of five times while being heated with a roll at 120°C to obtain a uniaxially oriented film. The physical properties of an obtained uniaxially oriented film were measured. The results are shown in Table 1. In Reference Example 1, it was possible to continuously perform uniaxial stretching.

[Table 1]

| | | Unit | Example 1 | Example 2 | Example 3 | Example 4 | Example 5 |
|---|---|---|---|---|---|---|---|
| Polymer | Ethylene-based polymer A | Parts by mass | 100 | 100 | | | |
| | Ethylene-based polymer B | Parts by mass | | | 100 | 100 | 100 |
| | Ethylene-based polymer C | Parts by mass | | | | | |
| | Propylene-based polymer A | Parts by mass | | | | | |
| | Ethylene-based polymer D | Parts by mass | | | | | |
| | Ethylene-based polymer E | Parts by mass | | | | | |
| | Ethylene-based polymer F | Parts by mass | | | | | |
| | Ethylene-based polymer G | Parts by mass | | | | | |
| | Ethylene-based polymer H | Parts by mass | | | | | |
| | Ethylene-based polymer I | Parts by mass | | | | | |
| | Ethylene-based polymer J | Parts by mass | | | | | |

(continued)

|  | | Unit | Example 1 | Example 2 | Example 3 | Example 4 | Example 5 |
|---|---|---|---|---|---|---|---|
| Film forming method | | | Biaxial stretching | ← | ← | ← | ← |
| Stretch ratio (MD×TD) | | Times | 5×7 | 5×9 | 3×4 | 3×7 | 5×7 |
| Stretching temperature | MD | °C | 134 | 134 | 134 | 134 | 134 |
| | TD | °C | 136 | 136 | 136 | 136 | 136 |
| Possibility of continuous biaxial stretching (*1) | | | Possible | Possible | Possible | Possible | Possible |
| Physical properties of ethylene-based polymer | MFR | g/10 min | 0.04 | 0.04 | 0.09 | 0.09 | 0.09 |
| | Density | kg/m$^3$ | 952 | 952 | 954 | 954 | 954 |
| | Melt tension | mN | 226 | 226 | 161 | 161 | 161 |
| | Mw/Mn | - | 42 | 42 | 41 | 41 | 41 |
| | Semi-melting temperature width | °C | 7.4 | 7.4 | 6.5 | 6.5 | 6.5 |
| | I21/I2 | | 178 | 178 | | | |
| Thickness of film | | μm | 15 | 13 | 47 | 35 | 17 |
| Physical properties of film | Tensile modulus MD | MPa | 3406 | 3179 | 2488 | 2668 | 2796 |
| | Tensile modulus TD | MPa | 5549 | 6410 | 2691 | 3389 | 3992 |
| | Dart impact | g | >840 | 627 | 750 | 774 | 652 |
| | Heat shrinkage rate 120°C MD | % | 0.7 | 1 | 1 | 0 | 1 |
| | Heat shrinkage rate 120°C TD | % | 4.8 | 6.4 | 2 | 5 | 6 |
| | Tear strength MD | N | 0.06 | 0.05 | 0.43 | 0.27 | 0.09 |
| | Tear strength TD | N | 0.09 | 0.04 | 0.09 | 0.04 | 0.05 |
| | Total haze | % | 32 | 46 | 45 | 46 | 23 |
| Chill roll adhesion/film appearance | | | B | B | B | B | B |

|  | | Unit | Example 6 | Example 7 | Example 8 | Example 9 | Example 10 |
|---|---|---|---|---|---|---|---|
| | Ethylene-based polymer A | Parts by mass | | 70 | | | |
| | Ethylene-based polymer B | Parts by mass | | | | | |
| | Ethylene-based polymer C | Parts by mass | 100 | | | | |
| | Propylene-based polymer A | Parts by mass | | 30 | | | |
| | Ethylene-based polymer D | Parts by mass | | | 100 | | |

(continued)

| | | | Unit | Example 6 | Example 7 | Example 8 | Example 9 | Example 10 |
|---|---|---|---|---|---|---|---|---|
| Polymer | Ethylene-based polymer E | | Parts by mass | | | | 100 | |
| | Ethylene-based polymer F | | Parts by mass | | | | | 100 |
| | Ethylene-based polymer G | | Parts by mass | | | | | |
| | Ethylene-based polymer H | | Parts by mass | | | | | |
| | Ethylene-based polymer I | | Parts by mass | | | | | |
| | Ethylene-based polymer J | | Parts by mass | | | | | |
| Film forming method | | | | Biaxial stretching | ← | ← | ← | ← |
| Stretch ratio (MD×TD) | | | Times | 5×9 | 5×8 | 5×8 | 5×8 | 5×8 |
| Stretching temperature | | MD | °C | 130 | 120 | 130 | 130 | 130 |
| | | TD | °C | 140 | 130 | 130 | 130 | 130 |
| Possibility of continuous biaxial stretching (*1) | | | | Possible | Possible | Possible | Possible | Possible |
| Physical properties of ethylene-based polymer | MFR | | g/10 min | 0.19 | 0.04 | 1.0 | 0.69 | 1.3 |
| | Density | | kg/m$^3$ | 952 | 952 | 947 | 955 | 952 |
| | Melt tension | | mN | 131 | 226 | 51 | 54 | 35 |
| | Mw/Mn | | - | 23 | 42 | 8.6 | 9.7 | 6.1 |
| | Semi-melting temperature width | | °C | 7.1 | 7.4 | 12.3 | 6.9 | 5.7 |
| | I21/I2 | | | | 178 | 58 | | |
| Thickness of film | | | μm | 13 | 17 | 17 | 11 | 17 |
| Physical properties of film | Tensile modulus | MD | MPa | 2627 | 2321 | 2828 | 3425 | |
| | | TD | MPa | 4885 | 3412 | 5494 | 6255 | |
| | Dart impact | | g | >850 | >850 | 486 | 429 | |
| | Heat shrinkage rate 120°C | MD | % | 4.3 | 5.9 | 3.2 | 3.3 | |
| | | TD | % | 4 | 10 | 10 | 5.2 | |
| | Tear strength | MD | N | 0.06 | 0.06 | 0.04 | 0.03 | |
| | | TD | N | 0.02 | 0.04 | 0.03 | 0.01 | |
| | Total haze | | % | 4.82 | 31 | 12 | 23 | |

(continued)

| | | Unit | Example 6 | Example 7 | Example 8 | Example 9 | Example 10 |
|---|---|---|---|---|---|---|---|
| Chill roll adhesion/film appearance | | | B | A | B | B | |
| | | Unit | Comparative Example 1 | Comparative Example 2 | Comparative Example 3 | Comparative Example 4 | Reference Example 1 |
| Polymer | Ethylene-based polymer A | Parts by mass | | | | | 100 |
| | Ethylene-based polymer B | Parts by mass | | | | | |
| | Ethylene-based polymer C | Parts by mass | | | | | |
| | Propylene-based polymer A | Parts by mass | | | | 15 | |
| | Ethylene-based polymer D | Parts by mass | | | | | |
| | Ethylene-based polymer E | Parts by mass | | | | | |
| | Ethylene-based polymer F | Parts by mass | | | | | |
| | Ethylene-based polymer G | Parts by mass | 100 | | | | |
| | Ethylene-based polymer H | Parts by mass | | 100 | | | |
| | Ethylene-based polymer I | Parts by mass | | | 100 | | |
| | Ethylene-based polymer J | Parts by mass | | | | 85 | |
| Film forming method | | | Biaxial stretching | ← | ← | ← | Uniaxial stretching |
| Stretch ratio (MD×TD) | | Times | 3×3 | 3×3 | 5×8 | 5×6 | 5 |
| Stretching temperature | MD | °C | 120 | 124 | 100 | 130 | 120 |
| | TD | °C | 130 | 124 | 127 | 130 | |
| Possibility of continuous biaxial stretching (*1) | | | Impossible | Impossible | Possible | Impossible | Possible |

(continued)

|  |  | Unit | Comparative Example 1 | Comparative Example 2 | Comparative Example 3 | Comparative Example 4 | Reference Example 1 |
|---|---|---|---|---|---|---|---|
| Physical properties of ethylene-based polymer | MFR | g/10 min | 0.4 | 1.1 | 1.6 | 1.0 | 0.04 |
|  | Density | kg/m³ | 944 | 950 | 927 | 958 | 952 |
|  | Melt tension | mN | 60 | 28 | 65 | 30 | 226 |
|  | Mw/Mn | - | 6.0 | 6.2 | 8.5 | 6.3 | 42 |
|  | Semi-melting temperature width | °C |  | 6.4 |  |  | 7.4 |
|  | I21/I2 |  |  | 32 |  |  | 178 |
| Thickness of film |  | μm |  |  | 30 |  | 25 |
| Physical properties of film | Tensile modulus — MD | MPa |  |  | 677 |  | 3917 |
|  | Tensile modulus — TD | MPa |  |  | 1235 |  | 2568 |
|  | Dart impact | g |  |  |  |  | 0 |
|  | Heat shrinkage rate 120°C — MD | % |  |  | 18 |  | 7.4 |
|  | Heat shrinkage rate 120°C — TD | % |  |  | 51 |  |  |
|  | Tear strength — MD | N |  |  |  |  | 4.8 |
|  | Tear strength — TD | N |  |  |  |  | 1.3 |
|  | Total haze | % |  |  | 4.1 |  | 23 |
| Chill roll adhesion/film appearance |  |  |  |  | B |  |  |
| *1: In Reference Example 1, "Possibility of continuous uniaxial stretching" |  |  |  |  |  |  |  |

**Claims**

1. A biaxially oriented film, comprising a layer obtained from a material containing an ethylene-based polymer,

   wherein the ethylene-based polymer has

   a melt flow rate (MFR) of 0.01 g/10 min or higher and 5.0 g/10 min or lower,
   a density of 941 kg/m³ or higher and lower than 970 kg/m³, and
   a melt tension of 31 to 250 mN, and

   Mw/Mn of the ethylene-based polymer is 6.1 or more, the Mw/Mn being a ratio of a weight-average molecular weight (Mw) to a number-average molecular weight (Mn) that are each measured by gel permeation chromatography (GPC).

2. The biaxially oriented film according to claim 1,
   wherein

   the material further contains a propylene-based polymer, and
   per 100 parts by mass of a sum of contents of the ethylene-based polymer and the propylene-based polymer in the material, the content of the ethylene-based polymer is 50 to 99 parts by mass, and the content of the propylene-based polymer is 1 to 50 parts by mass.

3. The biaxially oriented film according to claim 2,
   wherein the material contains, as the propylene-based polymer, at least one selected from the group consisting of a propylene homopolymer and a random copolymer of propylene and an $\alpha$-olefin having 2 to 8 carbon atoms excluding propylene.

4. The biaxially oriented film according to claim 1,
wherein a stretch ratio in a MD direction is twice or more, and a stretch ratio in a TD direction is twice or more.

5. A biaxially oriented film obtained from a material containing an ethylene-based polymer,

wherein a tensile modulus in a MD direction is 1,000 MPa or more,
a tensile modulus in a TD direction is 1,500 MPa or more,
a dart impact is 100 g or more,
a heat shrinkage rate in the MD direction is 15% or less, and
a heat shrinkage rate in the TD direction is 15% or less.

6. The biaxially oriented film according to claim 5, wherein a tear strength in the MD direction and a tear strength in the TD direction that are measured by an Elmendorf tear method are each independently 1 N or lower.

7. The biaxially oriented film according to claim 5, wherein a total haze is 50% or less.

8. A laminate, comprising a layer made of the biaxially oriented film according to any one of claims 1 to 7.

9. A packaging material, comprising a layer made of the biaxially oriented film according to any one of claims 1 to 7.

10. A method for producing a biaxially oriented film, comprising:

a step of providing a material containing an ethylene-based polymer having a melt flow rate (MFR) of 0.01 g/10 min or higher and 5.0 g/10 min or lower, a density of 941 kg/m$^3$ or higher and lower than 970 kg/m$^3$, a melt tension of 31 to 250 mN, and Mw/Mn of 6.1 or more, the Mw/Mn being a ratio of a weight-average molecular weight (Mw) to a number-average molecular weight (Mn) that are each measured by gel permeation chromatography (GPC);
a step of forming a film using at least the material; and
a step of biaxially stretching the film.

11. The method for producing a biaxially oriented film according to claim 10, wherein the film is formed using at least the material by a T-die casting method.

12. The method for producing a biaxially oriented film according to claim 10, wherein the film is biaxially stretched under conditions of a stretch ratio in a MD direction of twice or more and a stretch ratio in a TD direction of twice or more.

13. The method for producing a biaxially oriented film according to claim 10, wherein the film is sequentially biaxially stretched by a tenter method.

14. The method for producing a biaxially oriented film according to claim 10, wherein the production method is continuously performed.

15. The method for producing a biaxially oriented film according to any one of claims 10 to 14, wherein

the material further contains a propylene-based polymer, and
per 100 parts by mass of a sum of contents of the ethylene-based polymer and the propylene-based polymer in the material, the content of the ethylene-based polymer is 50 to 99 parts by mass, and the content of the propylene-based polymer is 1 to 50 parts by mass.

16. The method for producing a biaxially oriented film according to claim 15, wherein the material contains, as the propylene-based polymer, at least one selected from the group consisting of a propylene homopolymer and a random copolymer of propylene and an $\alpha$-olefin having 2 to 8 carbon atoms excluding propylene.

## INTERNATIONAL SEARCH REPORT

| International application No. |
|---|
| **PCT/JP2024/026425** |

**A. CLASSIFICATION OF SUBJECT MATTER**

*C08J 5/18*(2006.01)i; *B29C 48/88*(2019.01)i; *B29C 48/305*(2019.01)i; *B29C 55/12*(2006.01)i; *B29C 55/14*(2006.01)i; *B32B 27/32*(2006.01)i; *B65D 65/40*(2006.01)i
FI: C08J5/18 CES; B29C48/305; B29C48/88; B29C55/12; B29C55/14; B32B27/32 Z; B65D65/40 D

According to International Patent Classification (IPC) or to both national classification and IPC

**B. FIELDS SEARCHED**

Minimum documentation searched (classification system followed by classification symbols)

C08J5/18; B29C48/88; B29C48/305; B29C55/12; B29C55/14; B32B27/32; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-169286 A (MITSUBISHI PLASTICS, INC.) 06 September 2012 (2012-09-06) paragraphs [0031], [0033], [0049], example 1-2 | 1-8, 10-16 |
| X | JP 53-121877 A (NIHON MATAI CO., LTD.) 24 October 1978 (1978-10-24) examples 1-2 | 1-4, 8-10, 12 |
| X | WO 2022/153893 A1 (PRIME POLYMER CO., LTD.) 21 July 2022 (2022-07-21) claims, paragraphs [0019]-[0020], [0023], [0026], example 1, 3 | 1, 4-14 |
| A | JP 2001-131356 A (BANDO CHEMICAL INDUSTRIES, LTD.) 15 May 2001 (2001-05-15) examples | 1-16 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **27 September 2024** | **08 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/026425**

| Box No. III | Observations where unity of invention is lacking (Continuation of item 3 of first sheet) |
|---|---|

This International Searching Authority found multiple inventions in this international application, as follows:

(Invention 1) Claims 1-4 and 8-16
  Claim 1 lacks novelty in light of document 1, and thus does not have a special technical feature. However, claim 2 dependent on claim 1 has the special technical feature. Thus, claims 1-2 are classified as invention 1.
  Also, claims 3-4 and 8-16 are inventively related to claim 1, and are thus classified as invention 1.

(Invention 2) Claims 5-7
  It cannot be said that claims 5-7 have a special technical feature identical or corresponding to that of claim 2 classified as invention 1.
  In addition, claims 5-7 are not dependent on claim 1. Also, claims 5-7 are not substantially identical to or similarly closely related to any of the claims classified as invention 1.
  Therefore, claims 5-7 cannot be classified as invention 1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

International application No.

**PCT/JP2024/026425**

| Patent document cited in search report | | | Publication date (day/month/year) | Patent family member(s) | Publication date (day/month/year) |
|---|---|---|---|---|---|
| JP | 2012-169286 | A | 06 September 2012 | (Family: none) | |
| JP | 53-121877 | A | 24 October 1978 | (Family: none) | |
| WO | 2022/153893 | A1 | 21 July 2022 | US 2024/0052117 A1<br>claims, paragraphs [0029]-[0030], [0033], [0036], examples 1, 3<br>EP 4279248 A1<br>CN 116457186 A | |
| JP | 2001-131356 | A | 15 May 2001 | (Family: none) | |

Form PCT/ISA/210 (patent family annex) (July 2022)

**EP 4 755 952 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6716764 B
- JP 2020121455 A